# EUROPEAN PATENT SPECIFICATION

(11) **EP 2 623 873 B1**
(45) Date of publication and mention of the grant of the patent: **02.09.2020**
(21) Application number: 13153640.1
(22) Date of filing: 01.02.2013
(51) Int. Cl.: F24F 1/14, F28F 27/02

(54) **Outdoor heat exchanger and air conditioner comprising the same**
Außenwärmetauscher und Klimaanlage damit
Échangeur de chaleur extérieur et climatiseur comprenant celui-ci

(30) Priority: 03.02.2012 KR 20120011308
(43) Date of publication of application: 07.08.2013
(73) Proprietor: LG Electronics Inc., Youngdungpo-gu Seoul 150-721 (KR)
(72) Inventor: Song, Chiwoo, 153-023 Seoul (KR); Sa, Yongcheol, 153-023 Seoul (KR)
(74) Representative: Vossius & Partner Patentanwälte Rechtsanwälte mbB

(56) References cited:
- EP-A1- 1 391 660
- EP-A2- 1 555 494
- EP-A2- 1 589 299
- JP-B2- 3 750 145
- US-A- 6 038 873
- US-A1- 2006 123 820

## Description

The present invention relates to an outdoor heat exchanger and, more particularly, to an outdoor heat exchanger in which the passage of a refrigerant is varied in an air cooling operation and an air heating operation.

In general, an air conditioner is an apparatus configured to include a compressor, an outdoor heat exchanger, an expansion valve, and an indoor heat exchanger and to cool or heat the interior of a room using a refrigerating cycle. That is, the air conditioner may include a cooler for cooling the interior of a room and a heater for heating the interior of a room. The air conditioner may also be formed of a combination cooling and heating air conditioner for cooling or heating the interior of a room.

If the air conditioner is formed of the combination cooling and heating air conditioner, the air conditioner further includes a 4-way valve for changing the passage of a refrigerant, compressed by the compressor, depending on an air cooling operation or an air heating operation. That is, in the air cooling operation, the refrigerant compressed by the compressor flows in the outdoor heat exchanger through the 4-way valve, and the outdoor heat exchanger functions as a condenser. Next, the refrigerant condensed by the outdoor heat exchanger is expanded by the expansion valve, and the condensed refrigerant flow in the indoor heat exchanger. In this case, the indoor heat exchanger functions as an evaporator. Next, the refrigerant evaporated by the indoor heat exchanger flows in the compressor through the 4-way valve.

Meanwhile, in the air heating operation, the refrigerant compressed by the compressor flows in the indoor heat exchanger through the 4-way valve, and the indoor heat exchanger functions as a condenser. Next, the refrigerant condensed by the indoor heat exchanger is expanded by the expansion valve, and the expanded refrigerant flows in the outdoor heat exchanger. In this case, the outdoor heat exchanger functions as an evaporator. Next, the refrigerant evaporated by the outdoor heat exchanger flows in the compressor through the 4-way valve.

JP 3 750145 B2 discloses an outdoor heat exchanger according to the preamble of claim 1.

An object of the present invention is to provide an outdoor heat exchanger in which the passage of a refrigerant is varied in an air cooling operation and an air heating operation.

Another object of the present invention is to provide an outdoor heat exchanger which efficiently performs a defrosting operation of removing frost generated in the outdoor heat exchanger.

Objects of the present invention are not limited to the above-mentioned objects, and other objects that have not been described above will be evident to those skilled in the art from the following description.

An outdoor heat exchanger according to present invention includes the features of the appended claim 1.

The first header pipe may be coupled to the second header pipe, and the outdoor heat exchanger possibly further comprises a check valve disposed in the first header pipe and configured to prevent the refrigerant from flowing from the first header pipe to the second header pipe in the air cooling operation.

The second heat exchange unit may be disposed beneath the first heat exchange unit.

The outdoor heat exchanger possibly further comprises, a first expansion valve disposed in the first distribution pipe and configured to control a degree of opening, and a second expansion valve disposed in the second distribution pipe and configured to control a degree of opening. The first expansion valve may be closed in the air cooling operation and the second expansion valve may be opened in the air cooling operation.

An air conditioner according to another embodiment of the present invention includes, a compressor; an indoor heat exchanger; an outdoor heat exchanger; and a 4-way valve guiding the refrigerant compressed by the compressor to the outdoor heat exchanger in an air cooling operation and in a defrosting operation, and guiding the compressed refrigerant to the indoor heat exchanger in an air heating operation, wherein an outdoor heat exchanger comprises, a first header pipe coupled to the compressor, a first heat exchange unit configured to have one end coupled to the first header pipe and to thermally exchange a refrigerant with air, a first distribution pipe coupled to the other end of the first heat exchange unit, a bypass pipe coupled to the first distribution pipe, a second header pipe coupled to the first header pipe and the bypass pipe, a second heat exchange unit configured to have one end coupled to the second header pipe and to thermally exchange the refrigerant with air, a second distribution pipe coupled to the other end of the second heat exchange unit, a second hot gas pipe configured to couple the compressor and the second distribution pipe, and a second hot gas control valve disposed in the second hot gas pipe and opened or closed in order to control a flow of the refrigerant.

The outdoor heat exchanger further comprises a bypass valve disposed in the bypass pipe to control the flow of the refrigerant. The bypass valve is opened in the air cooling operation. In the partial defrosting operation, the second hot gas control valve is opened, the bypass valve is closed, and the refrigerant compressed by the compressor flows in the second heat exchange unit.

Details of other embodiments are included in the detailed description and drawings.

The above and other objects and features of the present invention will become apparent from the following description of some embodiments given in conjunction with the accompanying drawings, in which:
FIG. 1 shows the construction of an air conditioner according to an embodiment of the present invention;
FIGS. 2 and 3 show the constructions of outdoor heat exchangers according to embodiments of the present invention; and
FIG. 4 is a diagram showing the flow of a refrigerant in the partial defrosting operation of the outdoor heat exchanger according to an embodiment of the present invention.

Merits and characteristics of the present invention and methods for achieving them will become more apparent from the following embodiments taken in conjunction with the accompanying drawings. However, the present invention is not limited to the disclosed embodiments, but may be implemented in various ways. The embodiments are provided to complete the disclosure of the present invention and to allow those having ordinary skill in the art to fully understand the scope of the present invention. The present invention is defined by the category of the claims. The same reference numbers will be used throughout the drawings to refer to the same or like parts.

Hereinafter, embodiments of the present invention will be described in detail with reference to the accompanying drawings for describing an outdoor heat exchanger.

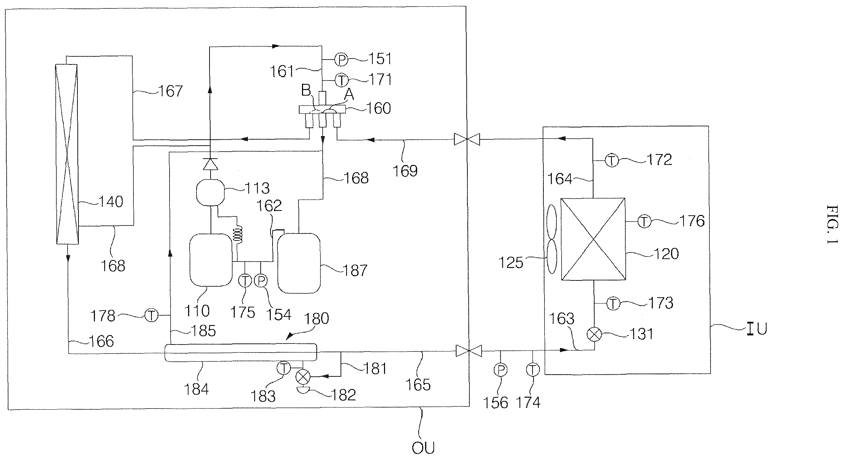

FIG. 1 shows the construction of an air conditioner according to an embodiment of the present invention.

The air conditioner according to the embodiment of the present invention includes an outdoor unit OU and an indoor unit IU.

The outdoor unit OU includes a compressor 110, an outdoor heat exchanger 140, and a supercooler 180. The air conditioner may include one or a plurality of the outdoor units OU.

The compressor 110 compresses a refrigerant of a low temperature and low pressure into a refrigerant of a high temperature and high pressure. The compressor 110 may have various structures, and an inverter type compressor or a constant speed compressor may be adopted as the compressor 110. A discharge temperature sensor 171 and a discharge pressure sensor 151 are installed on the discharge pipe 161 of the compressor 110. Furthermore, a suction temperature sensor 175 and a suction pressure sensor 154 are installed on the suction pipe 162 of the compressor 110.

The outdoor unit OU is illustrated as including one compressor 110, but the present invention is not limited thereto. The outdoor unit OU may include a plurality of the compressors and may include both an inverter type compressor and a constant speed compressor.

An accumulator 187 may be installed in the suction pipe 162 of the compressor 110 in order to prevent a refrigerant of a liquid state from entering the compressor 110. An oil separator 113 for collecting oil from the refrigerant discharged from the compressor 110 may be installed in the discharge pipe 161 of the compressor 110.

The discharge pipe 161 from which the refrigerant compressed by the compressor 110 is discharged is branched into a hot gas pipe 168. The hot gas pipe 168 couples the compressor 110 and the outdoor heat exchanger 140, so that the refrigerant compressed by the compressor 110 flows in the outdoor heat exchanger 140. The hot gas pipe 168 is used in a defrosting operation to be described later.

A 4-way valve 160 is a passage switch valve for switching cooling and heating. The 4-way valve 160 guides the refrigerant compressed by the compressor 110 to the outdoor heat exchanger 140 in an air cooling operation and guides the compressed refrigerant to an indoor heat exchanger 120 in an air heating operation. The 4-way valve 160 is in an A state in the air cooling operation and is in a B state in the air heating operation.

The outdoor heat exchanger 140 is disposed in an outdoor space, and the refrigerant passing through the outdoor heat exchanger 140 is thermally exchanged with outdoor air in the outdoor heat exchanger 140. The outdoor heat exchanger 140 functions as a condenser in an air cooling operation and functions as an evaporator in an air heating operation.

The outdoor heat exchanger 140 is coupled to a first inflow pipe 166 and then coupled to the indoor unit IU through a liquid pipe 165. The outdoor heat exchanger 140 is coupled to a second inflow pipe 167 and then coupled to the 4-way valve 160.

The supercooler 180 includes a supercooling heat exchanger 184, a second bypass pipe 181, a supercooling expansion valve 182, and a discharge pipe 185. The supercooling heat exchanger 184 is disposed on the first inflow pipe 166. In an air cooling operation, the second bypass pipe 181 functions to bypass the refrigerant discharged from the supercooling heat exchanger 184 so that the discharged refrigerant flows in the supercooling expansion valve 182.

The supercooling expansion valve 182 is disposed on the second bypass pipe 181. The supercooling expansion valve 182 lowers the pressure and temperature of a refrigerant by constricting the refrigerant of a liquid state that flows in the second bypass pipe 181 and then forces the refrigerant to flow in the supercooling heat exchanger 184. The supercooling expansion valve 182 may have various types, and a linear expansion valve may be used as the supercooling expansion valve 182 for convenience of use. A supercooling temperature sensor 183 for detecting temperature of the refrigerant constricted by the supercooling expansion valve 182 is installed on the second bypass pipe 181.

In an air cooling operation, a condensed refrigerant passing through the outdoor heat exchanger 140 is super-cooled through a thermal exchange with a refrigerant of low temperature, introduced through the second bypass pipe 181, in the supercooling heat exchanger 184, and the super-cooled refrigerant flows in the indoor unit IU.

The refrigerant passing through the second bypass pipe 181 is thermally exchanged in the supercooling heat exchanger 184, and the thermally exchanged refrigerant flows in the accumulator 187 through the discharge pipe 185. A discharge pipe temperature sensor 178 for detecting temperature of the refrigerant entering the accumulator 187 is installed on the discharge pipe 185.

A liquid pipe temperature sensor 174 and a liquid pipe pressure sensor 156 are installed on the liquid pipe 165 which couples the supercooler 180 and the indoor unit IU.

In the air conditioner according to the embodiment of the present invention, the indoor unit IU includes the indoor heat exchanger 120, an indoor fan 125, and an indoor expansion valve 131. The air conditioner may include one or a plurality of the indoor units IU.

The indoor heat exchanger 120 is disposed in an indoor space, and a refrigerant passing through the indoor heat exchanger 120 is thermally exchanged with indoor air in the indoor heat exchanger 120. The indoor heat exchanger 120 functions as an evaporator in an air cooling operation and functions as a condenser in an air heating operation. An indoor temperature sensor 176 for detecting indoor temperature is installed in the indoor heat exchanger 120.

The indoor expansion valve 131 is an apparatus for constricting an inflow refrigerant in an air cooling operation. The indoor expansion valve 131 is installed in the indoor inlet pipe 163 of the indoor unit IU. The indoor expansion valve 131 may have various types, and a linear expansion valve may be used as the indoor expansion valve 131, for convenience of use. It is preferred that the indoor expansion valve 131 be opened in a set opening degree in an air cooling operation and be fully opened in an air heating operation.

An indoor inlet pipe temperature sensor 173 is installed on the indoor inlet pipe 163. The indoor inlet pipe temperature sensor 173 may be installed between the indoor heat exchanger 120 and the indoor expansion valve 131. Furthermore, an indoor outlet pipe temperature sensor 172 is installed on the indoor outlet pipe 164.

In the air cooling operation of the above-described air conditioner, the flow of a refrigerant is described below.

A refrigerant of a high temperature and high pressure and a gaseous state, discharged from the compressor 110, flows in the outdoor heat exchanger 140 through the 4-way valve 160 and the second inflow pipe 167. The refrigerant is thermally exchanged with outdoor air in the outdoor heat exchanger 140 and thus condensed. The refrigerant drained from the outdoor heat exchanger 140 flows in the supercooler 180 through the first inflow pipe 166. Next, the refrigerant is super-cooled by the supercooling heat exchanger 184, and the super-cooled refrigerant flows in the indoor unit IU.

A part of the refrigerant super-cooled by the supercooling heat exchanger 184 is constricted by the supercooling expansion valve 182, so that the refrigerant passing through the supercooling heat exchanger 184 is super-cooled. The refrigerant super-cooled by the supercooling heat exchanger 184 flows in the accumulator 187.

The refrigerant flowed in the indoor unit IU is constricted by the indoor expansion valve 131 opened in a set opening degree and is then thermally exchanged with indoor air in the indoor heat exchanger 120, thus being evaporated. The evaporated refrigerant flows in the compressor 110 through the 4-way valve 160 and the accumulator 187.

In the air heating operation of the above-described air conditioner, the flow of a refrigerant is described below.

A refrigerant of a high temperature and high pressure and a gaseous state, discharged from the compressor 110, flows in the indoor unit IU through the 4-way valve 160. Here, the indoor expansion valves 131 of the indoor units IU are fully opened. The refrigerant drained from the indoor unit IU flows in the outdoor heat exchanger 140 through the first inflow pipe 166. Next, the refrigerant is thermally exchanged with outdoor air in the outdoor heat exchanger 140, thus being evaporated. The evaporated refrigerant flows in the suction pipe 162 of the compressor 110 through the 4-way valve 160 and the accumulator 187 through the second inflow pipe 167.

In an air heating operation, if outdoor temperature is very low, frost may be generated in the outdoor heat exchanger 140. In this case, a defrosting operation for removing the frost generated in the outdoor heat exchanger 140 may be performed. In this case, the flow of a refrigerant is the same as that in the air cooling operation. A defrosting operation for removing frost in the entire outdoor heat exchanger 140 according to the flow of a refrigerant identical with that in the air cooling operation is called a full defrosting operation, which is different from a partial defrosting operation to be described later.

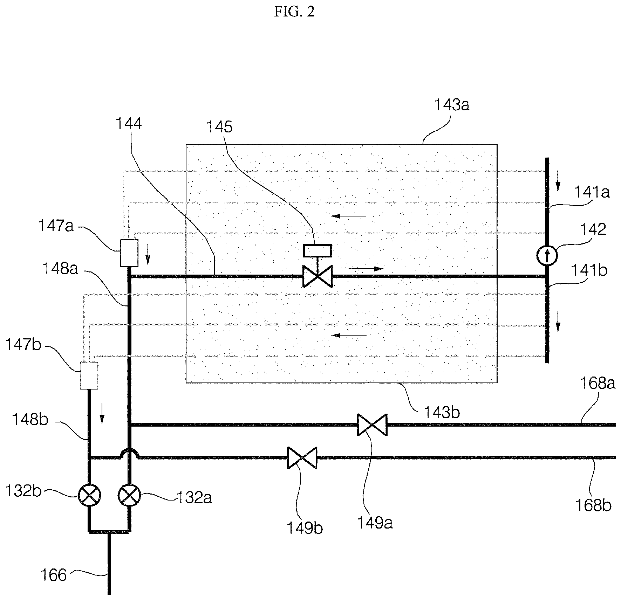

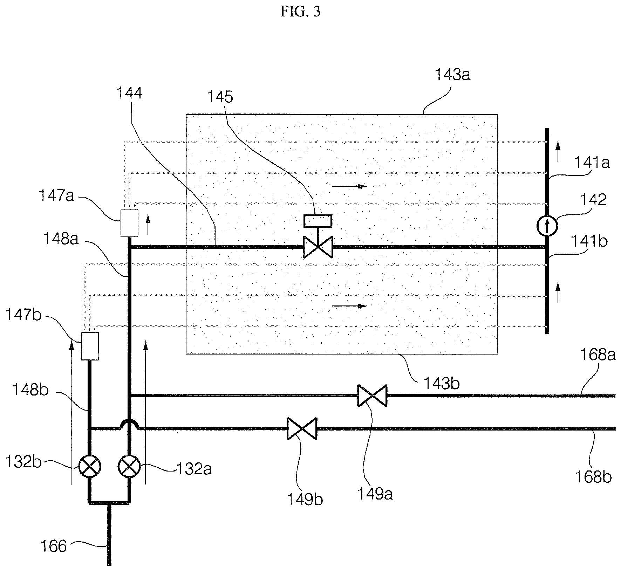

FIGS. 2 and 3 show the constructions of outdoor heat exchangers according to embodiments of the present invention.

The outdoor heat exchanger 140 according to an embodiment of the present invention includes a first header pipe 141a configured to have a refrigerant, compressed by the compressor in an air cooling operation, flowed therein, a first heat exchange unit 143a coupled to the first header pipe 141a and configured to thermally exchange a refrigerant with air, a bypass pipe 144 configured to have a refrigerant, thermally exchanged in the first heat exchange unit in an air cooling operation, to flow therein, a first distribution pipe 148a coupled to the bypass pipe 144, a second header pipe 141b configured to have a refrigerant, passing through the bypass pipe 144 in an air cooling operation, to flow therein, a second heat exchange unit 143b coupled to a second header pipe 141b and configured to thermally exchange a refrigerant with air, a second distribution pipe 148b configured to have a refrigerant, thermally exchanged in the second heat exchange unit 143b in an air cooling operation, to flow therein, a second hot gas pipe 168b configured to couple the compressor 110 and the second distribution pipe 148b, and a second hot gas control valve 149b disposed in the second hot gas pipe 168b to control the flow of a refrigerant.

The first header pipe 141a has one end coupled to the second inflow pipe 167 and thus coupled to the compressor 110. The first header pipe 141a has the other end coupled to the bypass pipe 144 and the second header pipe 141b. A check valve 142 is disposed at the other end of the first header pipe 141a. The check valve 142 controls the flow direction of a refrigerant so that the refrigerant from the first header pipe 141a is prevented from entering the second header pipe 141b and the refrigerant flows from the second header pipe 141b to the first header pipe 141a.

The first header pipe 141a is coupled to one end of the first heat exchange unit 143a. The first header pipe 141a is coupled to the plurality of refrigerant tubes of the first heat exchange unit 143a. That is, the first header pipe 141a is branched into the plurality of refrigerant tubes of the first heat exchange unit 143a.

The first heat exchange unit 143a has one end coupled to the first header pipe 141a and has the other end coupled to a first distributor 147a. The first heat exchange unit 143a includes a plurality of refrigerant tubes and a plurality of electric heat pins in which a refrigerant flows and thus thermally exchanges the refrigerant with air. One ends of the plurality of refrigerant tubes of the first heat exchange unit 143a are merged into the first header pipe 141a, and the other ends thereof are merged into the first distributor 147a.

The first distributor 147a couples the other end of the first heat exchange unit 143a and the first distribution pipe 148a. The plurality of refrigerant tubes of the first heat exchange unit 143a is merged and coupled to the first distributor 147a.

The first distribution pipe 148a is coupled to the first distributor 147a. The first distribution pipe 148a is coupled to the other end of the first heat exchange unit 143a through the first distributor 147a. The first distribution pipe 148a is coupled to the first inflow pipe 166. The first distribution pipe 148a and the second distribution pipe 148b are merged into the first inflow pipe 166.

A first expansion valve 132a for controlling the degree of opening of the first distribution pipe 148a is disposed in the first distribution pipe 148a. The first expansion valve 132a may constrict, bypass, or block a refrigerant passing through the first distribution pipe 148a. In an air cooling operation, the first expansion valve 132a is closed. In an air heating operation and a partial defrosting operation, the degree of opening of the first expansion valve 132a is controlled, and thus the first expansion valve 132a constricts a refrigerant.

A first hot gas pipe 168a may be coupled to the first distribution pipe 148a. The first hot gas pipe 168a is branched from the hot gas pipe 168, thus coupling the compressor 110 and the first distribution pipe 148a. In accordance with an embodiment, the first distribution pipe 148a may be coupled to the first distributor 147a or may be coupled to the other end of the first heat exchange unit 143a.

The first hot gas pipe 168a may be equipped with a first hot gas control valve 149a opened to control the flow of a refrigerant. The first hot gas control valve 149a is closed in an air cooling operation and an air heating operation. The first hot gas control valve 149a may be opened in a special defrosting operation in order to remove frost generated in the first heat exchange unit 143a, according to an embodiment.

The bypass pipe 144 has one end coupled to the first distribution pipe 148a and has the other end coupled to the second header pipe 141b. A bypass valve 145 for controlling the flow of a refrigerant is disposed in the bypass pipe 144. In an air cooling operation, the bypass valve 145 may be opened so that a refrigerant flows from the first distributor 147a to the second header pipe 141b. In an air heating operation and a partial defrosting operation, the bypass valve 145 may be closed so that a refrigerant is prevented from flowing from the second header pipe 141b to the first distributor 147a.

In accordance with an embodiment, the bypass pipe 144 may be coupled to the first distributor 147a or may be coupled to the other end of the first heat exchange unit 143a.

The second header pipe 141b is coupled to the bypass pipe 144 and the first header pipe 141a. The second header pipe 141b is coupled to one end of the second heat exchange unit 143b. The second header pipe 141b is coupled to a plurality of refrigerant tubes of the second heat exchange unit 143b. That is, the second header pipe 141b is branched into the plurality of refrigerant tubes of the second heat exchange unit 143b.

The second heat exchange unit 143b has one end coupled to the second header pipe 141b and has the other end coupled to the second distributor 147b. The second heat exchange unit 143b includes the plurality of refrigerant tubes and the plurality of electric heat pins in which a refrigerant flows and thermally exchanges the refrigerant with air. One ends of the plurality of refrigerant tubes of the second heat exchange unit 143b are merged into the second header pipe 141b, and the other ends thereof are merged into the second distributor 147b.

The second heat exchange unit 143b is disposed beneath the first heat exchange unit 143a. That is, the first heat exchange unit 143a and the second heat exchange unit 143b are vertically disposed, and they share the plurality of electric heat pins.

The second distributor 147b couples the other end of the second heat exchange unit 143b and the second distribution pipe 148b. The plurality of refrigerant tubes of the second heat exchange unit 143b is merged and coupled to the second distributor 147b.

The second distribution pipe 148b is coupled to a second distributor 147b. The second distribution pipe 148b is coupled to the other end of the second heat exchange unit 143b through the second distributor 147b. The second distribution pipe 148b is merged with the first distribution pipe 148a and then coupled to the first inflow pipe 166.

A second expansion valve 132b for controlling the degree of opening of the second distribution pipe 148b is disposed in the second distribution pipe 148b. The second expansion valve 132b may constrict, bypass, or block a refrigerant passing through the second distribution pipe 148b. In an air cooling operation, the second expansion valve 132b is opened. In an air heating operation, the degree of opening of the second expansion valve 132b is controlled so that a refrigerant is constricted. In the partial defrosting operation, the second expansion valve 132b is closed.

The second hot gas pipe 168b may be coupled to the second distribution pipe 148b. The second hot gas pipe 168b is branched from the hot gas pipe 168, thus coupling the compressor 110 and the second distribution pipe 148b. In accordance with an embodiment, the second distribution pipe 148b may be coupled to the second distributor 147b or may be coupled to the other end of the second heat exchange unit 143b.

The second hot gas pipe 168b may be equipped with the second hot gas control valve 149b opened to control the flow of a refrigerant. The second hot gas control valve 149b is closed in an air cooling operation and an air heating operation. The second hot gas control valve 149b is opened in the partial defrosting operation so that a refrigerant compressed by the compressor 110 flows in the second heat exchange unit 143b.

In the air cooling operation of the above-described outdoor heat exchanger, the flow of a refrigerant is described below with reference to FIG. 2.

A refrigerant compressed by the compressor 110 flows in the first header pipe 141a through the second inflow pipe 167. The check valve 142 prevents the refrigerant flowed in the first header pipe 141a from flowing into the second header pipe 141b. The refrigerant flowed in the first header pipe 141a flows in the first heat exchange unit 143a.

The refrigerant flowed in the first heat exchange unit 143a is condensed through a thermal exchanged with air. The refrigerant condensed by the first heat exchange unit 143a flows in the first distribution pipe 148a through the first distributor 147a. In an air cooling operation, the first expansion valve 132a is closed. Thus, the refrigerant flowed in the first distribution pipe 148a does not flow in the first inflow pipe 166, but flows in the bypass pipe 144.

In an air cooling operation, the bypass valve 145 is opened so that the refrigerant passing through the bypass pipe 144 flows in the second header pipe 141b. The refrigerant flowed in the second header pipe 141b flows in the second heat exchange unit 143b.

The refrigerant flowed in the second heat exchange unit 143b is condensed again through a thermal exchanged with air. The refrigerant condensed by the second heat exchange unit 143b flows in the second distribution pipe 148b through the second distributor 147b. In an air cooling operation, the second expansion valve 132b is fully opened. Thus, the refrigerant flowed in the first inflow pipe 166 flows in the indoor unit IU through the liquid pipe 165.

In the air heating operation of the above-described outdoor heat exchanger, the flow of a refrigerant is described below with reference to FIG. 3.

A refrigerant condensed by the indoor heat exchanger 120 of the indoor unit IU flows in the first inflow pipe 166 through the liquid pipe 165. The refrigerant flowed in the first inflow pipe 166 flows in the first distribution pipe 148a and the second distribution pipe 148b.

The refrigerant flowed in the second distribution pipe 148b is expanded by the second expansion valve 132b having an opening degree controlled. The refrigerant expanded by the second expansion valve 132b flows in the second heat exchange unit 143b through the second distributor 147b. The refrigerant flowed in the second heat exchange unit 143b is evaporated through a thermal exchange with air. The refrigerant evaporated by the second heat exchange unit 143b flows in the second header pipe 141b.

In an air heating operation, the bypass valve 145 is closed so that the refrigerant flowed in the second header pipe 141b does not pass through the bypass pipe 144. The refrigerant flowed in the second header pipe 141b flows in the first header pipe 141a through the check valve 142.

Meanwhile, the refrigerant flowed in the first distribution pipe 148a is expanded by the first expansion valve 132a. In an air heating operation, the bypass valve 145 is closed. Thus, the refrigerant expanded by the first expansion valve 132a does not flow in the second header pipe 141b, but flows in the first heat exchange unit 143a through the first distributor 147a.

The refrigerant flowed in the first heat exchange unit 143a is evaporated through a thermal exchange with air.

The refrigerant evaporated by the first heat exchange unit 143a flows in the first header pipe 141a. The refrigerant flowed in the first header pipe 141a is merged with the refrigerant passing through the second header pipe 141b. Next, the merged refrigerant flows in the second inflow pipe 167 and then flows in the compressor 110.

The flow of a refrigerant of the outdoor heat exchanger in the above-described cooling operation is the same as the flow of a refrigerant in the full defrosting operation.

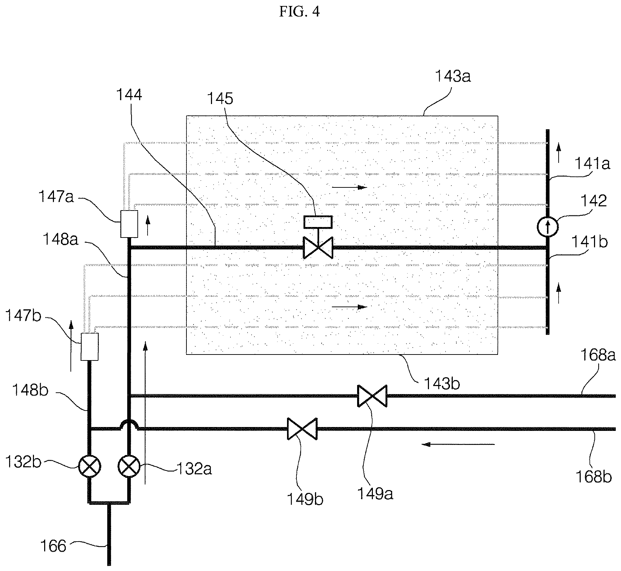

FIG. 4 is a diagram showing the flow of a refrigerant in the partial defrosting operation of the outdoor heat exchanger according to an embodiment of the present invention.

The partial defrosting operation basically includes an air heating operation and includes defrosting a part of the heat exchange unit. In the present embodiment, the partial defrosting operation is performed to defrost the second heat exchange unit 143b. That is, the first heat exchange unit 143a functions as an evaporator for performing the air heating operation, but gas of a high temperature and high pressure, compressed by the compressor 110, flows in the second heat exchange unit so that frost is removed.

In the full defrosting operation, the second heat exchange unit 143b has low defrosting performance because a refrigerant thermally exchanged with outdoor air in the first heat exchange unit 143a flows in the second heat exchange unit 143b. Accordingly, it is preferred that the partial defrosting operation be performed for a predetermined time prior to the full defrosting operation.

In the partial defrosting operation, the flow of a refrigerant is described below with reference to FIG. 4.

A refrigerant condensed by the indoor heat exchanger 120 of the indoor unit IU flows in the first inflow pipe 166 through the liquid pipe 165. In the partial defrosting operation, the second expansion valve 132b is closed. Thus, the refrigerant flowed in the first inflow pipe 166 fully flows in the first distribution pipe 148a.

The refrigerant flowed in the first distribution pipe 148a is expanded by the first expansion valve 132a. The bypass valve 145 is closed in the partial defrosting operation. Thus, the refrigerant expanded by the first expansion valve 132a does not flow in the second header pipe 141b, but flows in the first heat exchange unit 143a through the first distributor 147a. The refrigerant flowed in the first heat exchange unit 143a is evaporated through a thermal exchange with air.

The refrigerant evaporated by the first heat exchange unit 143a flows in the first header pipe 141a. The refrigerant flowed in the first header pipe 141a flows in the second inflow pipe 167 and then flows in the compressor 110.

Meanwhile, in the partial defrosting operation, the second hot gas control valve 149b is opened, and thus a part of the refrigerant compressed by the compressor 110 and then discharged toward the discharge pipe 161 flows in the second hot gas pipe 168b. The refrigerant flowed in the second hot gas pipe 168b flows in the second distribution pipe 148b and then flows in the second heat exchange unit 143b through the second distributor 147b.

The refrigerant flowed in the second heat exchange unit 143b flows through the second heat exchange unit 143b and heats the second heat exchange unit 143b, thus removing frost. After flowing through the second heat exchange unit 143b, the refrigerant flows in the second header pipe 141b.

In the partial defrosting operation, the bypass valve 145 is closed, and thus the refrigerant flowed in the second header pipe 141b does not pass through the bypass pipe 144. The refrigerant flowed in the second header pipe 141b flows in the first header pipe 141a through the check valve 142.

After the partial defrosting operation is performed, the full defrosting operation having the same flow of a refrigerant as the above-described cooling operation may be performed.

The outdoor heat exchanger of the present invention has one or more of the following advantages.

First, there is an advantage in that the passage of a refrigerant is varied in an air cooling operation and an air heating operation.

Second, there is an advantage in that only part of the heat exchange unit may be defrosted in an air heating operation.

Third, there is an advantage in that the defrosting operation can be efficiently performed.

Effects of the present invention are not limited to the above-mentioned effects, and other effects that have not been described above will be evident to those skilled in the art from the following description.

## Claims

1. An outdoor heat exchanger (140) configured to function as a condenser in an air cooling operation and as an evaporator in an air heating operation, the outdoor heat exchanger (140) comprising:
a first header pipe (141a) configured to have a refrigerant, compressed by a compressor (110), to flow therein in the air cooling operation;
a first heat exchange unit (143a) coupled to the first header pipe (141a) and including a plurality of refrigerant tubes and a plurality of electric heat pins to thermally exchange the refrigerant with air;
a bypass pipe (144) configured to have the refrigerant, thermally exchanged in the first heat exchange unit (143a), to flow therein in the air cooling operation;
a first distribution pipe (148a) coupled to the bypass pipe (144);
a second header pipe (141b) configured to have the refrigerant, passing through the bypass pipe (144), to flow therein in the air cooling operation;
a second heat exchange unit (143b) coupled to the second header pipe (141b) and including a plurality of refrigerant tubes and a plurality of electric heat pins to thermally exchange the refrigerant with air;
a second distribution pipe (148b) configured to have the refrigerant, thermally exchanged in the second heat exchange unit (143b), to flow therein in the air cooling operation;
a second hot gas pipe (168b) configured to couple the compressor (110) and the second distribution pipe (148b); and
a second hot gas control valve (149b) disposed in the second hot gas pipe (168b) to control a flow of the refrigerant,
**characterised in that**
the first heat exchange unit (143a) and the second heat exchange unit (143b) are vertically disposed and share the plurality of electric heat pins, and
the second heat exchange unit (143b) condenses the refrigerant, condensed by the first heat exchange unit (143a), again in the air cooling operation,
the outdoor heat exchanger (140) further comprises a bypass valve (145) disposed in the bypass pipe (144) and opened or closed in order to control the flow of the refrigerant,
wherein the bypass valve (145) is opened in the air cooling operation, and
the second hot gas control valve (149b) is opened, the bypass valve (145) is closed, and the refrigerant compressed by the compressor (110) flows in the second heat exchange unit (143b) to heat the second heat exchange unit (143b) in a partial defrosting operation, and
the first heat exchange unit (143a) evaporates the refrigerant in the partial defrosting operation.

2. The outdoor heat exchanger (140) of claim 1, wherein the first header pipe (141a) is coupled to the second header pipe (141b),
further comprising a check valve disposed in the first header pipe (141a) to prevent the refrigerant from flowing from the first header pipe (141a) to the second header pipe (141b) in the air cooling operation.

3. The outdoor heat exchanger (140) of claim 1 or 2, wherein the second heat exchange unit (143b) is disposed beneath the first heat exchange unit (143a).

4. The outdoor heat exchanger (140) of any of claims 1 to 3, further comprising:
a first expansion valve disposed in the first distribution pipe (148a) and configured to control a degree of opening in the partial defrosting operation; and
a second expansion valve disposed in the second distribution pipe (148b) and configured to control a degree of opening in the air heating operation,
wherein the first expansion valve is closed in the air cooling operation, and
the second expansion valve is opened in the air cooling operation and is closed in the partial defrosting operation.

5. An air conditioner comprising:
a compressor (110);
an indoor heat exchanger;
an outdoor heat exchanger (140) according to claims 1 to 4; and
a 4-way valve guiding the refrigerant compressed by the compressor (110) to the outdoor heat exchanger (140) in an air cooling operation and in a defrosting operation, and guiding the compressed refrigerant to the indoor heat exchanger in an air heating operation.

## Patentansprüche

1. Außenwärmetauscher (140), der konfiguriert ist, in einem Luftkühlbetrieb als ein Kondensator und in einem Luftheizbetrieb als ein Verdampfer zu arbeiten, wobei der Außenwärmetauscher (140) aufweist:
eine erste Sammelleitung (141a), die konfiguriert ist, im Luftkühlbetrieb ein durch einen Verdichter (110) verdichtetes Kältemittel darin fließen zu lassen;
eine erste Wärmetauscheinheit (143a), die mit der ersten Sammelleitung (141a) gekoppelt ist und mehrere Kältemittelröhren und mehrere elektrische Wärmerohre aufweist, damit das Kältemittel mit Luft Wärme tauscht;
eine Umgehungsleitung (144), die konfiguriert ist, im Luftkühlbetrieb das in der ersten Wärmetauscheinheit (143a) wärmegetauschte Kältemittel darin fließen zu lassen;
eine erste Verteilungsleitung (148a), die mit der Umgehungsleitung (144) gekoppelt ist;
eine zweite Sammelleitung (141b), die konfiguriert ist, im Luftkühlbetrieb das durch die Umgehungsleitung (144) strömende Kältemittel darin fließen zu lassen;
eine zweite Wärmetauscheinheit (143b), die mit der zweiten Sammelleitung (141b) gekoppelt ist und mehrere Kältemittelröhren und mehrere elektrische Wärmerohre aufweist, damit das Kältemittel mit Luft Wärme tauscht;
eine zweite Verteilungsleitung (148b), die konfiguriert ist, im Luftkühlbetrieb das in der zweiten Wärmetauscheinheit (143b) wärmegetauschte Kältemittel fließen zu lassen;
eine zweite Heißgasleitung (168b), die konfiguriert ist, den Verdichter (110) und die zweite Verteilungsleitung (148b) zu koppeln; und
ein zweites Heißgasregelventil (149b), das in der zweiten Heißgasleitung (168b) angeordnet ist, um einen Fluss des Kältemittels zu regeln,
**dadurch gekennzeichnet, dass**
die erste Wärmetauscheinheit (143a) und die zweite Wärmetauscheinheit (143b) vertikal angeordnet sind und die mehreren elektrischen Wärmerohre gemeinsam nutzen, und
die zweite Wärmetauscheinheit (143b) das durch die erste Wärmetauscheinheit (143a) kondensierte Kältemittel im Luftkühlbetrieb erneut kondensiert,
der Außenwärmetauscher (140) ferner ein Umgehungsventil (145) aufweist, das in der Umgehungsleitung (144) angeordnet ist und geöffnet oder geschlossen wird, um den Fluss des Kältemittels zu regeln,
wobei das Umgehungsventil (145) im Luftkühlbetrieb geöffnet ist, und
in einem Teilabtaubetrieb das zweite Heißgasregelventil (149b) geöffnet ist, das Umgehungsventil (145) geschlossen ist, und das durch den Verdichter (110) verdichtete Kältemittel in die zweite Wärmetauscheinheit (143b) fließt, um die zweite Wärmetauscheinheit (143b) zu heizen, und die erste Wärmetauscheinheit (143a) das Kältemittel im Teilabtaubetrieb verdampft.

2. Außenwärmetauscher (140) nach Anspruch 1, wobei die erste Sammelleitung (141a) mit der zweiten Sammelleitung (141b) gekoppelt ist,
der ferner ein Rückschlagventil aufweist, das in der ersten Sammelleitung (141a) angeordnet ist, um zu verhindern, dass das Kältemittel von der ersten Sammelleitung (141a) im Luftkühlbetrieb zur zweiten Sammelleitung (141b) fließt.

3. Außenwärmetauscher (140) nach Anspruch 1 oder 2, wobei die zweite Wärmetauscheinheit (143b) unter der ersten Wärmetauscheinheit (143a) angeordnet ist.

4. Außenwärmetauscher (140) nach einem der Ansprüche 1 bis 3, der ferner aufweist:
ein erstes Expansionsventil, das in der ersten Verteilungsleitung (148a) angeordnet und konfiguriert ist, einen Öffnungsgrad im Teilabtaubetrieb zu steuern; und
ein zweites Expansionsventil, das in der zweiten Verteilungsleitung (148b) angeordnet und konfiguriert ist, einen Öffnungsgrad im Luftheizbetrieb zu steuern,
wobei das erste Expansionsventil im Luftkühlbetrieb geschlossen ist, und das zweite Expansionsventil im Luftkühlbetrieb geöffnet und im Teilabtaubetrieb geschlossen ist.

5. Klimaanlage, die aufweist:
einen Verdichter (110);
einen Innenwärmetauscher;
einen Außenwärmetauscher (140) nach einem der Ansprüche 1 bis 4; und
ein 4-Wege-Ventil, das in einem Luftkühlbetrieb und in einem Abtaubetrieb das durch den Verdichter (110) verdichtete Kältemittel zum Außenwärmetauscher (140) leitet, und in einem Luftheizbetrieb das verdichtete Kältemittel zum Innenwärmetauscher leitet.

## Revendications

1. Échangeur de chaleur extérieur (140), prévu pour fonctionner comme condensateur en fonctionnement de refroidissement d'air et comme évaporateur en fonctionnement de chauffage d'air, ledit échangeur de chaleur extérieur (140) comprenant :
une première conduite collectrice (141a) prévue pour l'écoulement d'un réfrigérant comprimé par un compresseur (110) en fonctionnement de refroidissement d'air ;
une première unité d'échange de chaleur (143a) reliée à la première conduite collectrice (141a) et comprenant une pluralité de tuyaux de réfrigérant et une pluralité de dissipateurs thermiques électriques pour un échange de chaleur entre le réfrigérant et l'air ;
une conduite de dérivation (144) prévue pour l'écoulement du réfrigérant soumis à échange de chaleur dans la première unité d'échange de chaleur (143a), en fonctionnement de refroidissement d'air ;
une première conduite de distribution (148a) reliée à la conduite de dérivation (144) ;
une deuxième conduite collectrice (141b) prévue pour l'écoulement du réfrigérant passant dans la conduite de dérivation (144), en fonctionnement de refroidissement d'air ;
une deuxième unité d'échange de chaleur (143b) reliée à la deuxième conduite collectrice (141b) et comprenant une pluralité de tuyaux de réfrigérant et une pluralité de dissipateurs thermiques électriques pour un échange de chaleur entre le réfrigérant et l'air ;
une deuxième conduite de distribution (148b) prévue pour l'écoulement du réfrigérant soumis à échange de chaleur dans la deuxième unité d'échange de chaleur (143b), en fonctionnement de refroidissement d'air ;
une deuxième conduite de gaz chaud (168b) prévue pour relier le compresseur (110) à la deuxième conduite de distribution (148b) ; et
une deuxième vanne de commande d'air chaud (149b) montée dans la deuxième conduite de gaz chaud (168b) pour réguler le débit du réfrigérant,
**caractérisé en ce que**
la première unité d'échange de chaleur (143a) et la deuxième unité d'échange de chaleur (143b) sont disposées verticalement et se partagent la pluralité de dissipateurs thermiques électriques, et
la deuxième unité d'échange de chaleur (143b) condense à nouveau le réfrigérant condensé par la première unité d'échange de chaleur (143a), en fonctionnement de refroidissement d'air,
ledit échangeur de chaleur extérieur (140) comprend en outre une vanne de dérivation (145) montée dans la conduite de dérivation (144) et ouverte ou fermée afin de commander le débit du réfrigérant,
où la vanne de dérivation (145) est ouverte en fonctionnement de refroidissement d'air, et
la deuxième vanne de commande d'air chaud (149b) est ouverte, la vanne de dérivation (145) est fermée, et le réfrigérant comprimé par le compresseur (110) circule dans la deuxième unité d'échange de chaleur (143b) pour chauffer la deuxième unité d'échange de chaleur (143b) en fonctionnement de dégivrage partiel, et
la première unité d'échange de chaleur (143a) évapore le réfrigérant en fonctionnement de dégivrage partiel.

2. Échangeur de chaleur extérieur (140) selon la revendication 1, où la première conduite collectrice (141a) est reliée à la deuxième conduite collectrice (141b),
comprenant en outre un clapet antiretour monté dans la première conduite collectrice (141a) pour empêcher l'écoulement du réfrigérant de la première conduite collectrice (141a) à la deuxième conduite collectrice (141b) en fonctionnement de refroidissement d'air.

3. Échangeur de chaleur extérieur (140) selon la revendication 1 ou 2, où la deuxième unité d'échange de chaleur (143b) est disposée en dessous de la première unité d'échange de chaleur (143a).

4. Échangeur de chaleur extérieur (140) selon l'une des revendications 1 à 3, comprenant en outre :
une première vanne de détente montée dans la première conduite de distribution (148a) et prévue pour commander un degré d'ouverture en fonctionnement de dégivrage partiel ; et
une deuxième vanne de détente montée dans la deuxième conduite de distribution (148b) et prévue pour commander un degré d'ouverture en fonctionnement de chauffage d'air,
la première vanne de détente étant fermée en fonctionnement de refroidissement d'air, et
la deuxième vanne de détente étant ouverte en fonctionnement de refroidissement d'air et fermée en fonctionnement de dégivrage partiel.

5. Climatiseur, comprenant :
un compresseur (110) ;
un échangeur de chaleur intérieur ;
un échangeur de chaleur extérieur (140) selon les revendications 1 à 4 ; et
une vanne à 4 voies guidant le réfrigérant comprimé par le compresseur (110) vers l'échangeur de chaleur extérieur (140) en fonctionnement de refroidissement d'air et en fonctionnement de dégivrage, et guidant le réfrigérant comprimé vers l'échangeur de chaleur intérieur en fonctionnement de chauffage d'air.
